# EUROPEAN PATENT APPLICATION

(11) **EP 4 343 602 A1**
(43) Date of publication of application: **27.03.2024**
(21) Application number: 23163276.1
(22) Date of filing: 21.03.2023
(51) Int. Cl.: G06F 21/86, F03D 13/25

(54) **OFFSHORE EQUIPMENT DISTRUCTION APPARATUS AND METHOD**

(30) Priority: 26.09.2022 DK PA202200869
(71) Applicant: Ørsted Wind Power A/S, 7000 Fredericia (DK)
(72) Inventor: ANDERSEN, Mikkel Sivert, 7000 Fredericia Skaerbaek (DK); MORTENSEN, Daniel, 7000 Fredericia Skaerbaek (DK)
(74) Representative: Lewis Silkin LLP

(57) **Abstract**

Offshore equipment destruction apparatus comprising: a secure enclosure (9) for housing equipment (10), an initiator (12) for triggering a destruction means (14) located within the enclosure (9) to render at least part of the equipment (10) unusable. A security controller (11) automatically controls the initiator (12) to trigger the destruction means (14) in response to the identification of an unauthorised attempt to access the enclosure (9).

## Description

The present invention concerns offshore equipment destruction apparatus and a method of destroying offshore equipment. In particular, the present invention concerns an apparatus and method for destroying confidential/commercially sensitive equipment located on offshore structures, such as wind turbines or wind farm substations.

In this connection, it is often necessary to locate confidential or commercially sensitive equipment on offshore structures. For example, wind turbines or wind farm substations may often have communications processors which encrypt important sensor or monitoring data before encoded transmission onshore. As such, secrecy of the encryption and encoding technology used may be critical to ensuring the integrity of the data transmitted. For instance, a government regulator may require their own monitoring systems to be present at the turbine, independent of the wind farm operating company. At the same time, the regulator may also require that security measures are imposed to ensure that those systems are not interfered with by non-authorised personnel. Equally, law enforcement or military bodies may also require offshore structures to house monitoring equipment, with access to these systems being restricted to authorised law enforcement or military personnel.

Maintaining the security of confidential or otherwise commercially sensitive equipment on offshore structures presents challenges. Typically, such structures are unmanned, which renders them vulnerable to physical access by unauthorised parties. Even advanced mechanical barriers and alarm systems can be overcome, particularly in the face of a sustained access attempt. Furthermore, the remote location of offshore structures also means that, even if access by an unauthorised party is detected, the party will often have time to breach any mechanical security measures before security personnel could reach the site to detain them. This is particularly disadvantageous where confidential equipment is replicated at multiple sites. Once unauthorised access to these systems is gained, the security protocols associated with those systems are permanently compromised. This potentially necessitates wholesale replacement of the equipment infrastructure at every site, which would be hugely expensive and may require considerable downtime while site visits are scheduled. Accordingly, the consequences of permitting unauthorised access to confidential/commercially sensitive equipment are significant.

The present invention therefore seeks to offer solutions to the above problem.

According to a first aspect of the present invention there is provided an offshore equipment destruction apparatus comprising: a secure enclosure for housing equipment; an initiator for triggering a destruction means located within the enclosure to render at least part of the equipment unusable; and a security controller for automatically controlling the initiator to trigger the destruction means in response to the identification of an unauthorised attempt to access the enclosure.

In this way, confidential equipment located in offshore locations may be automatically destroyed before an unauthorised party can gain access. That is, when unauthorised access is detected, for example by one or more security sensors, a destruction sequence may be automatically triggered, resulting in the equipment being rendered unusable/unsalvageable. Accordingly, when equipment that is confidential in nature, such as specialist encryption, encoding and/or processing devices, is in an offshore location, it can be used without requiring a manned presence to guard and restrict access. This therefore allows entities to use highly confidential and proprietary equipment at offshore locations, whilst mitigating the risk of this technology being accessed by unauthorised individuals.

In embodiments, the offshore equipment destruction apparatus further comprises the destruction means, wherein the destruction means is located within the housing for rendering at least part of the equipment unusable when triggered. In this way, the part which effects the destruction of the equipment is integrated into the apparatus. In other arrangements, the destruction means is provided as a separate consumable.

In embodiments, the destruction means comprises thermite. In this way, the equipment may be destroyed by combusting the thermite to thereby melt its components. At the same time, the exothermic reduction-oxidation reaction of the combusting thermite does not require atmospheric oxygen and hence cannot be easily extinguished once initiated. Thermite is also not explosive and therefore may be more easily contained within the secure enclosure.

In embodiments, the initiator comprises an electro-pyrotechnic initiator for triggering the destruction means. In this way, the destruction of the equipment can be electronically initiated via the security controller. At the same time, the pyrotechnic composition within the initiator can be configured to generate a sufficiently high heat to exceed the ignition temperature where a combustible destruction means is provided. In embodiments, the initiator may comprise a detonator for triggering the destruction means. In this way, a smaller quantity of explosive or combustible material may be used to initiate combustion of a larger destruction means.

In embodiments, the secure enclosure comprises a body surrounding the interior for resisting unauthorised access and containing the effect of the destruction means when triggered. In this way, the secure enclosure provides a containment housing for preventing the destruction means from damaging other surrounding parts or personnel at the offshore structure.

In embodiments, the secure enclosure comprises at least one port for connecting the equipment to the exterior. In this way, connections between the equipment and external devices and services can be facilitated.

In embodiments, the at least one port is for one or more of providing power to the equipment, connecting the equipment to exterior sensors, connecting the equipment to a communications interface, and providing a coolant medium for cooling the equipment.

In embodiments, the offshore equipment destruction apparatus further comprises an uninterruptable power supply for powering the security controller. In this way, a backup power reserve may be provided for maintaining power to the security controller and/or the equipment if the input power supply is cut. This may thereby allow operation of the apparatus to be maintained in the event of a power outage.

In embodiments, the security controller is configured to receive one or more breach indicators, each associated with a different security layer related to the equipment, and wherein the security controller triggers the initiator in response to receiving one or more of the breach indicators. In this way, the security controller may trigger the destruction of the equipment in the event of a detected security breach at any one of a number of points ahead of the unauthorised party gaining access to the equipment. This may thereby provide a more robust response process for ensuring the integrity of the equipment is maintained.

In embodiments, the security controller is configured to automatically control the initiator to trigger the destruction means after a predetermined time delay after the identification of an unauthorised attempt to access the enclosure. In this way, a failsafe may be provided by allowing time for an authorised user who has inadvertently triggered a destruction sequence to abort that sequence before the equipment is destroyed. In embodiments, the duration of the predetermined time delay may be set according to which security layer has been breached. In embodiments, the duration of the predetermined time delay may be set such that the equipment will be destroyed, unless aborted, before an unauthorised party can access the secure enclosure.

In embodiments, the security controller is configured to abort the triggering of the destruction means in response to the receipt of a reset signal. In this way, an input by, for example, an authorised party at the site or by a remote monitoring system may be used to stop an initiated destruction sequence.

According to a second aspect, there is provided an offshore equipment destruction method comprising the steps of: housing equipment in a secure enclosure; providing an initiator for triggering a destruction means located within the enclosure to render at least part of the equipment unusable; identifying an unauthorised attempt to access the enclosure; and controlling, using a security controller, the initiator to automatically trigger the destruction means in response to the identification of an unauthorised attempt. In this way, a method of operating the above apparatus is provided.

In embodiments, the method further comprises the steps of: receiving one or more breach indicators, each associated with a different security layer related to the equipment, and wherein the step of controlling the initiator comprises triggering in response to receiving one or more of the breach indicators.

In embodiments, the step of controlling the initiator comprises triggering the destruction means after a predetermined time delay after the identification of an unauthorised attempt to access the enclosure.

In embodiments, the method further comprises the step of aborting the triggering of the destruction means in response to the receipt of a reset signal.

Illustrative embodiments of the present invention will now be described with reference to the accompanying drawings in which:
Figure 1 shows an offshore structure supporting a secure housing containing confidential equipment according to a first embodiment; and
Figure 2 shows a cross sectional view of the secure housing shown in Figure 1.

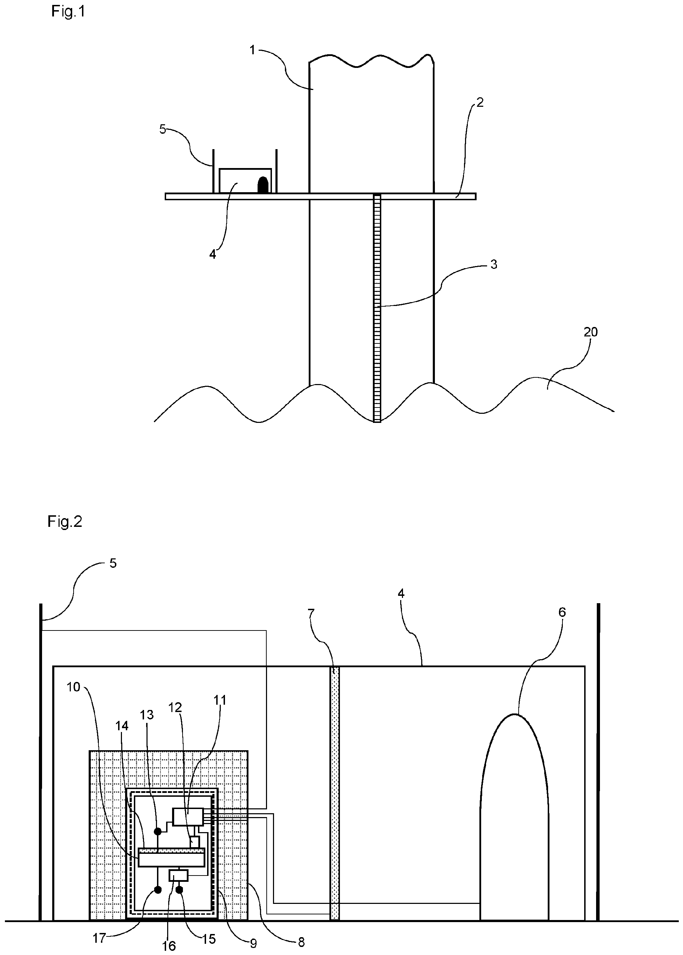

A first illustrative embodiment of the invention is shown in Figures 1 and 2. In this embodiment, as shown in Figure 1, the offshore structure 1 is provided as a wind turbine, with a monopile foundation supporting a service platform 2 and a wind turbine tower (not shown). In this example, the service platform 2 is accessed via a ladder 3 down the water level 20. As such, a vessel may dock against the ladder 3 to allow personnel to climb up to the service platform. Nevertheless, the remote location of the offshore structure effectively represents a first security layer to restrict access. Personnel sensors may be provided on the platform 2 to identify when people are present. This may be correlated with authorisation approval to determine if such access is authorised.

In this embodiment, the service platform supports a secure housing 4, which is used to house confidential equipment. It will be understood that in other embodiments, the secure housing may be located on a platform inside the interior of the monopile or wind turbine tower. The secure housing 4 is surrounded by fencing 5 which provides a second security layer for restricting access. The fencing is provided with a door to permit authorised access. Conversely, a security sensor may be provided to identify if there has been an unauthorised breach of the fence 5 or its door, for example by the fence being cut.

Figure 2 shows a cross sectional view of the interior of the secure housing 4 shown in Figure 1. The interior is accessed through a door 6 which acts as a third security layer. The interior of the housing 4 is divided into two chambers by partition 7. The outer chamber may be used to house other equipment which has lower security requirements. A locked door is provided in the partition 7 to restrict access, and hence this acts as a fourth security layer. Again, if the partition 7 or its door is breached this may be identified by an associated security sensor.

Within the inner chamber of the secure housing 4 is a security barrier cage 8, inside of which sits a containment housing 9. The security barrier cage 8 provides a fifth security layer.

The containment housing 9 is provided as a thick-walled metal enclosure for housing the confidential equipment 10. The containment housing 9 therefore forms a secure enclosure for restricting access to the equipment and hence provides a sixth security layer. Again, a locked door may be provided for permitting authorised access.

The confidential equipment 10 is connected to one or more local devices, such as exterior sensors, via local connection port 13, and to one or more remote devices, such as a communications network, via remote connection port 17. The equipment may be powered through a power input 15, which extends through an uninterruptable power supply 16 to maintain power if the power input 15 is disrupted. The uninterruptable power supply 16 is also connected to a security controller 11 for supplying power thereto.

The security controller 11 receives inputs from sensors associated with each of the security layers, either via the local connection port 13 or through a direct connection, and processes these inputs to identify a potential security breach. The security controller 11 further controls an initiator 12 as an output.

Within containment housing 9 is provided a layer of thermite 14, which is seated on top of the equipment 10 and forms a destruction means for destroying the equipment 10 when ignited during a destruction sequence, as is described in further detail below. In this respect, the metal powder and metal oxide within the thermite 14 undergoes a redox reaction when ignited to produce a concentrated, intense zone of heat which acts to melt the components of the equipment, thereby rendering the equipment unusable. As such, the equipment 10 is destroyed by the combusted thermite 14 in the sense that it is no longer usable or recoverable. For example, processing hardware and memory components may be burnt thereby melting the internal vias, conductive pathways and semiconductor parts, and integrated circuits. As such, even if residual physical parts of the equipment remain after combustion, these parts are unsalvageable. Preferably, the service platform 2 and/or the equipment 10 is positioned horizontally to ensure an even and effective destruction of the equipment 10 by the thermite 14. In some instances, sloping of the service platform 2 and/or the equipment 10 may result in less efficient or complete destruction, and therefore a horizontal arrangement is preferred.

In one example, the height of the layer of thermite 14 within the containment housing 9 is approximately 20mm. In another example, the height of the layer of thermite 14 is between 15mm and 25mm. Advantageously, the layer of thermite 14 is evenly distributed above the equipment 10 to ensure efficient destruction of the equipment 10. Preferably, the layer of thermite 14 is provided directly on top of the equipment with no separation distance. Furthermore, in some example arrangements, the layer of thermite 14 may be concentrated on regions of the equipment 10 to maximise damage to critical components. For instance, a guide layer may be provided between the thermite 14 and the equipment 10 which includes one or more via windows for directing combusting thermite. When the thermite is ignited, the guide layer material may resist the combusting thermite material, causing it to pour through the open via windows, thereby maximising destruction on the regions of the equipment beneath.

The initiator 12 comprises means for igniting the thermite 14. In this embodiment, the initiator 12 comprises an electro-pyrotechnic initiator or electric match. When an ignition signal is applied by the security controller 11 during the destruction sequence, the voltage and current of the signal causes resistive heating in a bridgewire within the initiator 12. This raises the bridgewire above the ignition temperature of a pyrotechnic composition which forms an igniter. The pyrotechnic composition then burns to a sufficiently hot temperature to ignite the thermite 14. For example, in some embodiments, a thin piece of thermite may be provided as a detonator to ignite first, which is then used to ensure complete ignition of the main thermite layer 14. In one example, at least two initiators 12 are provided for redundancy to ensure that the thermite 14 is ignited if one of the initiators 12 miss-fires. Preferably, the initiators 12 are provided in pairs. The initiators 12 being provided at the sides and/or in middle of the main thermite layer 14 to enable complete ignition of the thermite 14. In another example, an array of initiators 12 are provided, distributed across the thermite 12. By triggering the initiators simultaneously, this may thereby provide for more rapid and complete ignition of the thermite 14 for providing for accelerated destruction.

The security controller 11 may further include an authorised abort input for disabling or aborting a destruction sequence. An input console or mobile unit may be used to input an abort code to the abort input. At the same time, the controller 11 may be connected to a remote monitoring site via the remote connection port 17, which may allow the initiator 12 to be remotely triggered or to allow an abort input to be applied from a remote location.

In use, the confidential equipment 10 may be used to monitor various sensors or devices located on the offshore structure via the local connection port 13, and to encode this data for transmission via the communication network through the remote connection port 17. Equally, encoded control information may be sent via the remote connection port 17, be decoded by the confidential equipment 10 and used to control a local device via the local connection port 13.

At the same time as the above, the security controller 11 will monitor the sensors associated with the various security layers described above and identify if breaches of these security layers occur. Depending on the configuration of the controller 11 in relation to those security layers, the controller 11 may determine that an unauthorised attempt to access the confidential equipment is being made and it trigger a destruction sequence in response thereto. For example, if the fence 5 is breached by, for instance, it being cut, the controller may trigger a destruction sequence ending with the ignition of the thermite 14. As part of this process, the triggering of the initiator 12 by the controller 11 may be delayed by a predetermined period to allow time for an accidental triggering to be aborted via the abort input. For example, if an accident causes the fence 5 to be breached inadvertently, an authorised user may input an abort code associated with the second security layer to prevent the safety controller 11 from igniting the thermite 14.

It will be understood that the safety controller 11 may escalate the response as higher security layers are breached. For example, if the partition 7 associated with the fourth security layer is breached, a shorter predetermined abort period may be provided in recognition that a potential assailant is nearer to breaching the containment housing 9. Conversely, if the security barrier cage 8 is breached, the controller 11 may trigger the initiator 12 immediately.

Once triggered, the initiator 12 acts to ignite the thermite 14, which in turn destroys the equipment 10 by melting it under the heat generated. The containment housing 9 acts to contain the thermite 14 to prevent it damaging other parts of the offshore structure or personnel. Advantageously, thermite 14 also doesn't require atmospheric oxygen to combust and therefore, even if an unauthorised party were to gain access to the interior of the housing 9, they cannot stop the thermite 14 from combusting by, for instance, flooding the region with a carbon dioxide extinguisher. In addition, the containment housing 9 may withstand the increased internal pressure caused by the combustion of the thermite 14.

The containment housing 9 may further include a funnel, or other outlet for expelling smoke. As such, the smoke generated by the combustion of the thermite 14 and, often more significantly, from the equipment 10 being destructed may be exhausted from the containment housing 9. In addition, the containment housing 9 may be formed of a material able to withstand the high temperatures caused by the combustion of the thermite 14. For example, in examples, the internal portion of the containment housing 9 is provided with a plurality of heat resistant tiles to ensure that the structural integrity of the containment housing 9 is maintained throughout the combustion of the thermite 14.

It will also be understood that the thermite 14 and ignition system may be configured such that the time taken from ignition to destroying the equipment 10 is shorter than the time it would take to breach the security barrier cage 8 or containment housing 9. Typically, the security barrier cage 8 and containment housing 9 are configured such that the time taken to breach them is at least 15 minutes. For example, a thermite layer 14 would typically be expected to burn through electronic equipment within 3 minutes, but in some scenarios it can take up to 7 minutes to fully burn through the electronic equipment. As such, once the controller 11 detects an attempted breach of one of these security layers, the destruction of the equipment is triggered and by the time an unauthorized party reaches the equipment, it will have been destroyed.

In addition to the above, the provision of the universal power supply 16 means that the controller 11 remains powered, even if the external supply is disconnected. Consequently, an unauthorized party is prevented from circumventing the system by cutting the power to the controller 11. That is, even if the power input 15 is cut, the controller 11 may still remain operational and if, for instance, the security barrier cage 8 is breached, it may ignite the thermite 14 to destroy the equipment.

Accordingly, with the above arrangement, confidential/commercially sensitive equipment located in offshore locations may be automatically destroyed before an unauthorised party can access it. That is, if unauthorised access is detected, a destruction sequence is triggered, which automatically leads to the ignition of thermite 14, and hence the destruction of the equipment, unless aborted. Therefore, such equipment can be used safely in offshore locations, without requiring a manned presence, for instance to guard and restrict access.

It will be understood that the embodiment illustrated above shows applications of the invention only for the purposes of illustration. In practice the invention may be applied to many different configurations, the detailed embodiments being straightforward for those skilled in the art to implement.

For example, although in the above embodiment, thermite is used as the destruction means, it will be understood that other means may also be used. For example, other combustion materials, as well as mechanical or electromagnetic mechanisms may be used. For instance, the equipment may be mechanically broken apart to render it unusable or an electromagnetic pulse device could be used to wipe memory in the equipment and/or physically damage its constituent components.

It will also be understood that the destruction means may be configured to target specific components within the equipment. For example, where stored data presents the security concern, the destruction means may be concentrated to destroy the equipment's storage memory.

## Claims

1. An offshore equipment destruction apparatus comprising:
a secure enclosure for housing equipment;
an initiator for triggering a destruction means located within the enclosure to render at least part of the equipment unusable; and
a security controller for automatically controlling the initiator to trigger the destruction means in response to the identification of an unauthorised attempt to access the enclosure.

2. An offshore equipment destruction apparatus according to claim 1, further comprising the destruction means, wherein the destruction means is located within the housing for rendering at least part of the equipment unusable when triggered.

3. An offshore equipment destruction apparatus according to claim 1 or 2, wherein the destruction means comprises thermite.

4. An offshore equipment destruction apparatus according to any preceding claim, wherein the initiator comprises a pyrotechnic initiator for triggering the destruction means.

5. An offshore equipment destruction apparatus according to any preceding claim, wherein the secure enclosure comprises a body surrounding the interior for resisting unauthorised access and containing the effect of the destruction means when triggered.

6. An offshore equipment destruction apparatus according to any preceding claim, wherein the secure enclosure comprises at least one port for connecting the equipment to the exterior.

7. An offshore equipment destruction apparatus according to claim 6, wherein the at least one port is for one or more of providing power to the equipment, connecting the equipment to exterior sensors, connecting the equipment to a communications interface, and providing a coolant medium for cooling the equipment.

8. An offshore equipment destruction apparatus according to any preceding claim, further comprising an uninterruptable power supply for powering the security controller.

9. An offshore equipment destruction apparatus according to any preceding claim, wherein the security controller is configured to receive one or more breach indicators, each associated with a different security layer related to the equipment, and
wherein the security controller triggers the initiator in response to receiving one or more of the breach indicators.

10. An offshore equipment destruction apparatus according to any preceding claim, wherein the security controller is configured to automatically control the initiator to trigger the destruction means after a predetermined time delay after the identification of an unauthorised attempt to access the enclosure.

11. An offshore equipment destruction apparatus according to claim 10, wherein the security controller is configured to abort the triggering of the destruction means in response to the receipt of a reset signal.

12. An offshore equipment destruction method comprising the steps of:
housing equipment in a secure enclosure;
providing an initiator for triggering a destruction means located within the enclosure to render at least part of the equipment unusable;
identifying an unauthorised attempt to access the enclosure; and
controlling, using a security controller, the initiator to automatically trigger the destruction means in response to the identification of an unauthorised attempt.

13. An offshore equipment destruction method according to claim 12, further comprising the step of:
receiving one or more breach indicators, each associated with a different security layer related to the equipment, and
wherein the step of controlling the initiator comprises triggering in response to receiving one or more of the breach indicators.

14. An offshore equipment destruction method according to claim 12 or 13, wherein the step of controlling the initiator comprises triggering the destruction means after a predetermined time delay after the identification of an unauthorised attempt to access the enclosure.

15. An offshore equipment destruction method according to any of claims 12 to 14, further comprising the step of aborting the triggering of the destruction means in response to the receipt of a reset signal.
